# EUROPEAN PATENT SPECIFICATION

(11) **EP 3 075 717 B1**
(45) Date of publication and mention of the grant of the patent: **21.08.2019**
(21) Application number: 16162381.4
(22) Date of filing: 24.03.2016
(51) Int. Cl.: C04B 35/626, B28C 7/02, B28C 7/04, C04B 38/00, G01B 11/24, B28B 17/00

(54) **METHOD FOR MANUFACTURING CERAMIC FORMED BODY**
VERFAHREN ZUR HERSTELLUNG EINES KERAMISCHEN FORMKÖRPERS
PROCÉDÉ DE FABRICATION DE CORPS FORMÉS DE CÉRAMIQUE

(30) Priority: 31.03.2015 JP 2015074117; 06.01.2016 JP 2016001241
(43) Date of publication of application: 05.10.2016
(73) Proprietor: NGK Insulators, Ltd., Nagoya-city, Aichi 467-8530 (JP)
(72) Inventor: TAJIMA, Yuichi, Nagoya-city, Aichi 467-8530 (JP); OKUMURA, Kensuke, Nagoya-city, Aichi 467-8530 (JP); HAYASHI, Seiichiro, Nagoya-city, Aichi 467-8530 (JP)
(74) Representative: Mewburn Ellis LLP

(56) References cited:
- EP-A1- 1 844 918
- US-A1- 2011 049 741
- US-A1- 2012 049 419
- Starrett ET AL: "Profile360 for Ceramic Extrusion Manufacturing Your Measurement Solution for Ceramic Extrusion Manufacturing Laser Measurement SOLUTIONS", , 31 January 2013 (2013-01-31), XP055291732, Retrieved from the Internet: URL:http://www.starrett.com/docs/other-dow nloadable-resources/2526---profile360-for- ceramic-extrusion-manufacutring-(lo-res).p df?sfvrsn=11 [retrieved on 2016-07-27]
- "DEVELOPMENTS IN STACK-MOLD TOOLING NOW INCREASE LARGE-PART PRODUCTIVELY", MODERN PLASTICS INTERNATIONAL, MCGRAW-HILL,INC. LAUSANNE, CH, vol. 10, no. 12, 1 December 1980 (1980-12-01), page 12,14, XP001176427, ISSN: 0026-8283

## Description

### BACKGROUND OF THE INVENTION

### Field of the Invention

The present invention relates to methods for manufacturing a ceramic formed body.

### Description of the Related Art

Conventionally a ceramic formed body, which is configured as a honeycomb structure having a honeycomb shape, for example, has been used for a wide range of purposes, including a catalyst carrier to purify exhaust gas from automobile, a filter to remove diesel particulates, or a heat storage member for combustion devices. A ceramic formed body is manufactured by extrusion of a forming raw material, followed by a firing step to fire it at a high temperature. A honeycomb structure as one form of the ceramic formed body has a lattice-shaped partition wall that defines a plurality of polygonal cells extending from one end face to the other end face and forming a through channel of fluid.

A forming step to extrude a ceramic formed body into a desired shape is performed using an extrusion machine having an extrusion port to which an extrusion die of a desired shape is attached, so as to extrude a forming raw material from the extrusion die with a predetermined extrusion pressure and at extrusion speed while keeping a horizontal extrusion direction.

For the forming raw material, various types of ceramic raw materials and binders, for example, are used, which are mainly in a powder form or a fine particle form. Then in order to allow such a material to be extruded from the extrusion machine, liquid such as water and surfactant is added at the mixing step to mix the ceramic raw materials or the like. This mixing step is typically performed using a batch-type mixer (batch mixer) firstly to dry-mix two types or more of aggregate particle raw materials including the ceramic raw materials as stated above that are weighed based on the predetermined mixture ratio (first mixing), to which liquid (water) is added for wet mixing (second mixing), whereby wet mixture (formulation for forming) is obtained (see Patent Document 1). Thereafter, the wet mixture (formulation for forming) prepared by wet mixing is kneaded at a kneading step, and then a forming raw material having predetermined viscosity that is adjusted suitably for extrusion is extruded from an extrusion machine.

US 2012/0049419 discloses an approach to the manufacture of ceramic honeycombs in which a plasticized ceramic batch mixture is prepared and then extruded.

EP 1 844 918 A1 discloses a method for manufacturing honeycomb body by an extrusion-molding machine.

[Patent Document 1] WO2005/018893

### SUMMARY OF THE INVENTION

Note here that the viscosity of a forming raw material is affected by the amount of liquid added to the forming raw material, and it is known that the viscosity of the forming raw material greatly affects the mechanical load (torque) applied to the extrusion machine or the shape of the ceramic formed body after extrusion. That is, the viscosity of the forming raw material immediately before extrusion by the extrusion machine will greatly affect the production efficiency for extrusion (forming speed) of the final ceramic formed body or the shape of the product (e.g., roundness). Therefore in order to stabilize extrusion behavior during extrusion and to manufacture a ceramic formed body having a controlled product shape, the viscosity of the forming raw material immediately before sending to the extrusion machine has to be made constant.

In the step of wet mixing (second mixing) in the above Patent Document 1 to add liquid (water), mixing by batch processing is mainly performed similarly to the dry mixing (first mixing) performed by batch processing. That is, a predetermined amount of liquid is added to the dry mixture prepared by dry mixing, followed by mixing by stirring, and over a predetermined duration for stirring, a wet mixture per one batch (per one unit) obtained is sent out to the following kneading step. That is, at timing when one batch of the wet mixture is sent out to the kneading step, operation is performed to switch to send out another batch of wet mixture that is separately mixed by stirring.

At this time, when the batches of wet mixture are switched, a wet mixture immediately after switching to be newly sent out to the kneading step and a wet mixture immediately before the switching to another batch of wet mixture may be different in their bulk density. That is, since the wet mixture immediately after switching is not-dense in bulk density as compared with the wet mixture immediately before switching described later, because a long time has not passed since the ending of the mixing by stirring. On the contrary, the wet mixture immediately before switching increases in bulk density in accordance with the own weight of the wet mixture itself because a long time has passed since the ending of the mixing by stirring before sending to the kneading step, and so is dense in bulk density as compared with the wet mixture immediately after switching as stated above.

As a result, the bulk density of one batch of wet mixture varies over time, and so the characteristics of the wet mixture may be greatly different depending the timing of batch switching. Such a difference in bulk density of the wet mixture greatly affects the fluctuation of viscosity of the forming raw material that is made via the kneading step, and as a result, this affects the production efficiency for extrusion of a ceramic formed body or the shape of the product, causing a failure to extrude a ceramic formed body stably in some cases.

In view of such conventional circumstances, the present invention aims to provide a method for manufacturing a ceramic formed body enabling the manufacturing of a ceramic formed body having a controlled product shape, such as roundness, by keeping the torque applied to the extrusion machine stable and low, and using a forming raw material having well-balanced fluidity and shape-retaining property.

According to the present invention, the following method for manufacturing a ceramic formed body is provided.

A method for manufacturing a ceramic formed body, as set out in claims 1 and 2.

According to the method for manufacturing a ceramic formed body of the present invention, the wet mixing step is performed by continuous processing. This can suppress a variation in bulk density at the time of batch switching, which occurs for the wet mixture that is prepared by wet mixing by batch processing. As a result, the viscosity of the forming raw material to be introduced to the extrusion machine can be made constant, and so the product shape of the ceramic formed body, such as roundness, can be stabilized.

Additionally, a shape of the ceramic formed body immediately after extrusion is measured, and the additive amount of liquid at any one of the wet mixing step and the kneading step can be adjusted based on the measurement result of the shape of the formed body. Thereby, the measurement result of the shape of the formed body can be quickly fed-back so as to reflect the measurement result on extrusion of the ceramic formed body that is continuously performed from the kneading step (or the wet mixing step).

Especially the shape of the ceramic formed body can be finely adjusted while making the kneading step and the forming step operate continuously without stopping temporarily. Note here that the ceramic formed body manufacturing apparatus, to which the method for manufacturing a ceramic formed body as stated above is applied, has the advantageous effect from the manufacturing method.

### BRIEF DESCRIPTION OF THE DRAWINGS

Fig. 1 schematically shows the configuration of a method for manufacturing a ceramic formed body of one embodiment of the present invention and an apparatus for manufacturing a ceramic formed body not according to the invention.
Fig. 2 schematically shows the flow of conversion process from a raw material into a forming raw material, and of making a ceramic formed body from the forming raw material.

### DESCRIPTION OF THE PREFERRED EMBODIMENTS

The following describes embodiments of a method for manufacturing a ceramic formed body of the present invention and an apparatus for manufacturing a ceramic formed body not according to the present invention. The present invention is not limited to the following embodiments, to which changes, modifications and improvements may be added without deviating from the scope of the invention.

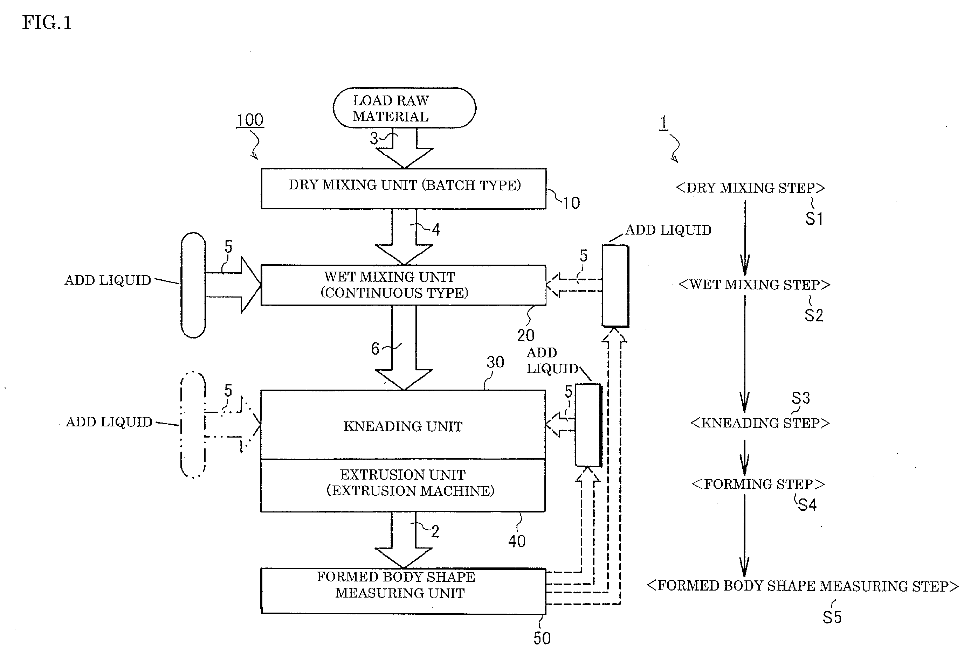

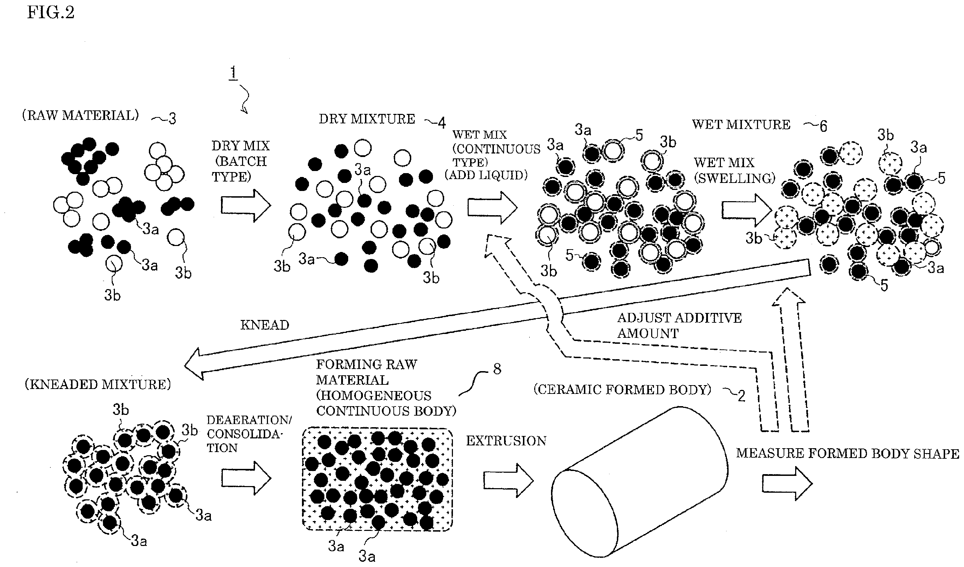

As mainly shown in Fig. 1 and Fig. 2, a method for manufacturing a ceramic formed body of one embodiment of the present invention (hereinafter simply called a "manufacturing method 1") relates to extrusion processing especially to make a ceramic formed body 2, and mainly includes: a dry mixing step S1 to dry-mix a plurality of types of raw material 3 including a powder-form or a fine-particle form ceramic fine particles 3a and binder 3b by batch processing; a wet mixing step S2 to add liquid 5 to the obtained dry mixture 4, while wet mixing by continuous processing; a kneading step S3 to knead the obtained wet mixture 6; and a forming step S4 to extrude a forming raw material 8, which is prepared by degassing and consolidating the obtained kneaded mixture 7, using an extrusion machine, whereby a ceramic formed body 2 of a desired shape (e.g., a honeycomb structure having a honeycomb shape) is made. At the kneading step S3 in the manufacturing method 1 of the present embodiment, liquid 5 can be added additionally during kneading of the wet mixture 6.

The manufacturing method 1 of the present embodiment further includes, in addition to the above configuration, a formed body shape measuring step S5 to measure the shape of the formed body of the ceramic formed body 2 immediately after extrusion, and the amount of the liquid 5 added at any one of the wet mixing step S2 and the kneading step S3 can be adjusted based on the shape of the formed body measured.

The manufacturing method 1 of the present embodiment is implemented using a ceramic formed body manufacturing apparatus 100 having the configuration to implement each of the above-mentioned steps S1 to S5 that is schematically shown in Fig. 1. The ceramic formed body manufacturing apparatus 100 mainly includes a batch-type dry mixing unit 10, a continuous-type wet mixing unit 20, a kneading unit 30 and an extrusion unit 40 as their functional configuration, and the kneading unit 30 has, as its element, a function to further add the liquid 5. Additionally the ceramic formed body manufacturing apparatus 100 includes a formed body shape measuring unit 50 to measure the shape of the ceramic formed body 2 immediately after extrusion, and has a function to adjust the amount of the liquid 5 to be added at any one of the wet mixing unit 20 and the kneading unit 30 based on the shape of the formed body measured. The following describes the flow of the manufacturing method 1 of the present embodiment, as well as the configuration of each part of the ceramic formed body manufacturing apparatus 100 as stated above.

Herein, the extrusion unit 40 corresponds to a well-known extrusion machine that has been conventionally used for extrusion of the ceramic formed body 2. The liquid 5 added is not limited especially, which may be water, surfactant, lubricant or plasticizer alone or the one including at least one type of them. The liquid 5 is mixed or kneaded to each of the raw materials 3, whereby the forming raw material 8 as a homogeneous continuous body having viscosity suitable for extrusion from the extrusion unit 40 can be obtained.

The dry mixing step S1 is performed using the batch-type dry mixing unit 10 (batch mixer). The raw materials 3 including a plurality of types of powder form or fine-particle form ceramic fine particles 3a and binder 3b that are weighed at a predetermined mixture ratio is loaded into the dry mixing unit 10, and mixing by stirring is performed by a stirring mechanism (not illustrated) so that the ceramic fine particles 3a and the binder 3b can be mixed mutually uniformly. Thereby, the raw materials 3 are converted into the dry mixture 4 in which the plurality of types of ceramic fine particles 3a or the like are dispersed uniformly (see Fig. 2).

The obtained dry mixture 4 is sent to the wet mixing step S2. Herein the wet mixing step S2 is performed using the continuous type wet mixing unit 20 (continuous mixer) to perform wet mixing of the dry mixture 4 by continuous processing.

With such a continuous-type wet mixing unit 20 used, the dry mixture 4 mixed by the dry mixing unit 10 is gradually loaded into the wet mixing unit 20 in accordance with a prescribed loading ratio, to which the liquid 5 is loaded that is prescribed in accordance with the load amount of the dry mixture 4 at the same time, while wet mixing by a stirring mechanism (not illustrated). Thereby, the dry mixture 4 and the liquid 5 are converted into the wet mixture 6, in which they are dispersed uniformly and mixed.

In the manufacturing method 1 and the ceramic formed body manufacturing apparatus 100 of the present embodiment, the additive amount of the liquid 5 at the wet mixing step S2 (wet mixing unit 20) is set within the range of 60 to 100 mass% with respect to the total additive amount of the liquid 5 including the additive amount of the liquid 5 as well that is added at the kneading step S3 (kneading unit 30) described later.

At the wet mixing step S2, when the liquid 5 is added to the dry mixture 4, followed by mixing by stirring by the continuous processing, then the liquid 5 is firstly adsorbed to the surface of each of the ceramic fine particles 3a and the binder 3b. Then, when this wet mixing is continued, the binder 3b in the raw material 3 absorbs the liquid 5 and swells (see Fig. 2). Thereby, the dry mixture 4 is converted into the wet mixture 6. On the contrary, the ceramic fine particles 3a do not swell even when they absorb the liquid 5. In the manufacturing method 1 of the present embodiment, the process from loading of the dry mixture 4 into the wet mixing unit 20 to sending out of the wet mixture 6 to the kneading unit 30 to perform the following step (kneading step S3) is continuously performed.

Subsequently, the kneading step S3 is performed using the kneading unit 30 (kneader). In the manufacturing method 1 of the present embodiment, the kneading step S3 and the subsequent forming step S4 are performed continuously and integrally. That is, in the ceramic formed body manufacturing apparatus 100, the wet mixture 6 sent from the wet mixing unit 20 is kneaded by the kneading unit 30, and the processed kneaded mixture 7 (forming raw material 8) is directly sent out to the extrusion unit 40 that is configured continuously and integrally with the kneading unit 30. Then, the forming raw material 8 is extruded through the extrusion die of the extrusion unit 40. Thereby, the ceramic formed body 2 is made (see Fig. 2).

At the kneading step S3, the binder 3b swelling at the wet mixing step S2 is compatibilized with the ceramic fine particles 3a. As a result, the surface of the ceramic fine particles 3a becomes coated with the swelling binder 3b (see Fig. 2). Thereby, the wet mixture 6 is converted into the kneaded mixture 7. Herein, the obtained kneaded mixture 7 undergoes degassing processing in the kneading unit 30 to suck the air included in the kneaded mixture 7 using a vacuum suction device for degassing, and then consolidation processing is performed to the kneaded mixture 7 to apply predetermined load to the kneaded mixture 7 so as to compress the kneaded mixture for densification (see Fig. 2). As a result, the forming raw material 8 as a densified homogeneous continuous body to be loaded in the extrusion unit 40, in which the ceramic fine particles 3a and the binder 3b are mixed uniformly, can be made.

The continuous-type wet mixing unit 20 used allows the processing to the extrusion unit 40 via the kneading unit 30 to be performed continuously and integrally. Therefore, the ceramic formed body 2 can be made more effectively and stably.

In the manufacturing method 1 of the present embodiment, the kneading step S3 may be configured so that the liquid 5 is further added during kneading of the wet mixture 6. That is, in the process to convert the raw material 3 into the forming raw material 8, there are two chances to add the liquid 5.

The forming raw material 8 prepared through degassing and consolidation of the kneaded mixture 7 is sent to the extrusion unit 40 (extrusion machine), where the forming raw material is extruded with a predetermined extrusion pressure and at such extrusion speed (forming step S4). Herein, since the configuration of the extrusion machine corresponding to the extrusion unit 40 is well known, the detailed descriptions thereof are omitted.

Subsequently, the shape of the ceramic formed body 2 immediately after extrusion through the die is measured (formed body shape measuring step S5). Herein, the formed body shape measuring step S5 can be performed using an existing shape measurement technique, for example, using a contactless-type formed body shape measuring unit 50 including a well-known laser measurement unit. Thereby, data on the shape of the ceramic formed body 2 immediately after extrusion can be obtained. From the measurement result of the shape of the formed body based on the obtained data on the shape, deviation from a standard shape is detected, and a prescribed amount of the liquid 5 is added to the forming raw material 8 based on the magnitude of the deviation, for example, so as to adjust the additive amount of the liquid 5 (see the dotted-line arrows in Fig. 1).

Herein, such addition of the liquid 5 based on the measurement of the formed body shape is performed at any one of the wet mixing step S2 (wet mixing unit 20) and the kneading step S3 (kneading unit 30). That is, at any one of the wet mixing step S2 and the kneading step S3, the additive amount of the liquid 5 that is added to formulate the forming raw material 8 is made constant, and then the additive amount is adjusted with a predetermined ratio with respect to such an additive amount of the liquid 5. Especially the additive amount of the liquid 5 is preferably adjusted at the kneading step S3 immediately before the extrusion. That is, the additive amount of the liquid 5 at the wet mixing step S2 may be made constant, and then the liquid 5 may be added with a predetermined ratio with respect to the additive amount of the liquid 5.

When the additive ratio of the liquid in the forming raw material 8 is determined as high based on the measured shape of the formed body, the additive amount of the liquid 5 at the wet mixing step S2 or the kneading step S3 is adjusted so as to decrease from the prescribed additive amount, for example. On the contrary, when the additive ratio of the liquid in the forming raw material 8 is determined as low based on the measured shape of the formed body, the additive amount of the liquid 5 at the wet mixing step S2 or the kneading step S3 is adjusted so as to increase from the prescribed additive amount, for example. Note here that, such determination to increase or decrease the additive amount of the liquid 5 based on the formed body shape is made considering the influences from the ambient environment, such as temperatures and humidity, as well as based on some empirical values.

As described above, according to the manufacturing method 1 of the present embodiment, wet mixing of the dry mixture 4 can be performed by continuous processing (continuous type) at the wet mixing step S2 (wet mixing unit 20). Thereby, a variation in bulk density of the wet mixture, which occurs at the time of the conventional batch switching, does not occur, and so extrusion behavior of the ceramic formed body during batch switching does not change. As a result, the ceramic formed body 2 can be manufactured while keeping fluidity of the forming raw material 8 during extrusion and shape-retaining property of the ceramic formed body 2, and the product shape of the ceramic formed body 2, such as the roundness, becomes stable.

Especially, the wet mixing step S2 is performed by continuous processing, in other words, a continuous-type mixer is used as the wet mixing unit 20, whereby the process from the wet mixing step S2 to the forming step S4 via the kneading step S3 can be performed continuously and integrally. That is, the process can be performed without interruption from the wet mixing step S2 to the forming step S4, and so the ceramic formed body 2 can be manufactured effectively.

Additionally the shape of the ceramic formed body 2 immediately after extrusion is measured, and the measurement result of the shape of the ceramic formed body 2 is fed back to control the viscosity of the forming raw material 8 in a certain range. Thereby, torque during extrusion can be kept more stable and suppressed lower, and the shape of the formed body can be stabilized. Especially since the kneading step S3 and the forming step S4 are performed continuously and integrally, the shape of the ceramic formed body can be controlled to be constant while making the ceramic formed body manufacturing apparatus 100 operate continuously without stopping temporarily.

### (Examples)

The following describes a method for manufacturing a ceramic formed body of the present invention and an apparatus for manufacturing a ceramic formed body not according to the present invention by way of the following examples, and the method for manufacturing a ceramic formed body of the present invention and the apparatus for manufacturing a ceramic formed body not according to the present invention are not limited to these embodiments.

### (1) Making a honeycomb structure (ceramic formed body)

A honeycomb structure as one type of a ceramic formed body was made by the method for manufacturing a ceramic formed body of the present invention and using the apparatus for manufacturing a ceramic formed body not according to the present invention (Examples 1 to 3 and Comparative Examples 1,2). The honeycomb structures of Examples 1 to 3 and Comparative Examples 1, 2 were manufactured while changing the types of the wet mixing unit (batch-type or continuous-type) and the conditions concerning the additive ratio of liquid at the wet mixing step and the kneading step, and the other conditions were the same. These honeycomb structures had a round-pillar shape, in which a large number of polygonal cells were defined by a lattice-shaped partition wall, and the thickness of the partition wall was 100 µm, the cell shape was hexagonal, the cell density was 600 cpsi (cells per square inch) (93.0 cells/cm²), the honeycomb diameter was 100 mm, and the honeycomb length was 100 mm. The following Table 1 shows the condition to make the honeycomb structures, the additive ratios of liquid at the wet mixing step and the kneading step, and their evaluation results.

**[Table 1]**

| | Dry mixing unit | Wet mixing unit | Kneading unit (forming unit) | Additive ratio of water | | Evaluation results | | |
|---|---|---|---|---|---|---|---|---|
| | | | | Wet mixture step /% | Kneading step /% | Variation range of the supplied amount / % | Extrusion torque/ % | Roundness / mm |
| Ex. 1 | batch | continuous | continuous | 100 | 0 | 1.6 | 61 | 1.4 |
| Ex. 2 | batch | continuous | continuous | 90 | 10 | 1.2 | 62 | 1.2 |
| Ex. 3 | batch | continuous | continuous | 60 | 40 | 1.1 | 67 | 1.1 |
| Comp. Ex. 1 | batch | batch | continuous | 100 | 0 | 3.2 | 62 | 2.5 |
| Comp. Ex. 2 | batch | continuous | continuous | 50 | 50 | 0.9 | 86 | 1 |

### (2) Relationship between additive ratio of liquid and variation range of supplied amount

As shown in Table 1, the variation range of supplied amount was 2.0% or less (1.6% or less in more details) for all of Examples 1 to 3, and so it was confirmed that the supplied amount of the forming raw material during extrusion did not vary greatly. That is, it showed that the forming raw material was supplied stably to the extrusion unit. Therefore no factors to vary the shape of the formed body greatly were found, and it was considered that extrusion was performed favorably.

As shown in Example 1, when the continuous-type wet mixing unit was used at the wet mixing step, it was confirmed that a favorable value of the variation range of supplied amount was shown even when all of the liquid was added at the wet mixing step, and as the additive ratio of liquid at the kneading step increased with respect to the total additive amount of liquid (10 to 40 mass%), the variation range of supplied amount decreased (see Table 1). That is, these values of the variation range of supplied amount show that, although there is no necessity to add liquid at the kneading step especially, fluidity of the forming raw material was improved by adding liquid at the kneading step. On the contrary, as shown in Comparative Example 1, when the additive ratio of liquid at the kneading step was low (0%) with respect to the total additive amount of liquid under the condition of using a batch-type wet mixing unit, the variation range of supplied amount was as large as 3% or more. That is, this shows that, when liquid was added at the two steps of the wet mixing step (continuous processing) and the kneading step, a predetermined ratio or more (at least 10 mass% or more) of the liquid added at the kneading step could improve the fluidity of the forming raw material. On the contrary, if the additive ratio of liquid at the kneading step was more (50 mass% or more: see Comparative Example 2) with respect to the total additive amount, although the variation range of supplied amount was suppressed low, the value of extrusion torque was high (the details are described later), and so it was difficult to perform stable extrusion. Therefore, the additive ratio of liquid at the kneading step was the range of 0 to 40 mass% suitably.

### (3) Relationship between additive ratio of liquid and extrusion torque

As shown in Table 1, the value of extrusion torque was around 60 to 70% in all of Examples 1 to 3 and Comparative Example 1, and in this case, excessive load was not applied presumably to the extrusion machine. On the contrary, the value of extrusion torque in Comparative Example 2 was 86%, which were higher than those of Examples 1 to 3 and Comparative Examples 1 as stated above. In Comparative Example 2, the additive ratio of liquid at the wet mixing step and at the kneading step was 50%. In this case, although the value of the variation range of supplied amount shown in the above (2) was small and so the forming raw material was supplied stably, the value of extrusion torque was too high, meaning that load to the extrusion unit (extrusion machine) was large, and adverse effects on the production efficiency for extrusion and the forming speed of the ceramic formed body were found. This showed that, in the case of a continuous-type wet mixing step, at least 60% of liquid has to be added at the wet mixing step.

### (4) Relationship between additive ratio of liquid and roundness

Roundness is an index to represent a difference (deviation) from a round-shaped geometric circle, which typically is a difference in radii between two geometric circles that are concentrically arranged so as to enclose the measurement target when the distance between the two circles is the minimum, and indicated with a difference between the maximum diameter and the minimum diameter. In these Examples, an existing roundness measurement instrument was used so as to measure the maximum diameter and the minimum diameter at the both ends face of a honeycomb structure with a vernier caliper, and the difference thereof was obtained.

According to this, roundness was 1.8 mm or less for all of Examples 1 to 3, and so they had favorable roundness. It was confirmed that viscosity of the forming raw material was stable in the manufacturing method and the ceramic formed body manufacturing apparatus of the present embodiment including two steps of adding liquid to the forming raw material, and that the effect from adding liquid twice was effective. On the contrary, as shown in Comparative Example 1, when the value of the variation range of supplied amount was as large as 3% or more, this greatly affected the roundness of the honeycomb structure made by extrusion, and the roundness tended to exceed 1.8 mm. That is, the roundness increased with the value of the variation range of supplied amount, and so it was difficult to manufacture a honeycomb structure (ceramic formed body) having a stable product shape.

As shown in Examples 1 to 3 as stated above, according to the method for manufacturing a ceramic formed body of the present invention and the apparatus for manufacturing a ceramic formed body not according to the present invention, the wet mixing step is performed by continuous processing (a continuous-type wet mixing unit is used), whereby viscosity of the forming raw material can be made constant at the wet mixing step. As a result, the shape of the ceramic formed body after extrusion becomes stable.

The method for manufacturing a ceramic formed body of the present invention and the apparatus for manufacturing a ceramic formed body not according to the present invention can be used to manufacture a ceramic formed body for a catalyst carrier to purify exhaust gas from automobile, a filter to remove diesel particulates, or a heat storage member for combustion devices.

### Description of Reference Numerals

1: manufacturing method (method for manufacturing a ceramic formed body), 2: ceramic formed body, 3: raw material, 3a: ceramic fine particles, 3b: binder, 4: dry mixture, 5: liquid, 6: wet mixture, 7: kneaded mixture, 8: forming raw material, 10: dry mixing unit, 20: wet mixing unit, 30: kneading unit, 40: extrusion unit, 50: formed body shape measuring unit, 100: ceramic formed body manufacturing apparatus, S1: dry mixing step, S2: wet mixing step, S3: kneading step, S4: forming step, S5: formed body shape measuring step.

## Claims

1. A method for manufacturing a ceramic formed body (2), comprising:
a dry mixing step (S1) of dry mixing a raw material (3) to make the ceramic formed body by batch processing;
a wet mixing step (S2) of adding liquid (5) to a dry mixture (4) obtained at the dry mixing step (S1) by continuous processing in a continuous-type wet mixing unit (20), the dry mixture (4) being gradually loaded into the wet mixing unit (20) in accordance with a prescribed loading ratio with the liquid (5) that is prescribed in accordance with the load amount of the dry mixture (4) loaded at the same time, the liquid including at least one type of water, surfactant, lubricant and plasticizer, while wet mixing by a stirring mechanism;
a kneading step (S3) of kneading a wet mixture (6) obtained at the wet mixing step (S2); and
a forming step (S4) of extruding a forming raw material (8) obtained at the kneading step (S3), and wherein at the kneading step (S3), the liquid (5) is optionally further added during kneading of the wet mixture, and wherein an amount of the liquid added at the wet mixing step is 60 to 100 mass% with respect to a total additive amount of the liquid added at the wet mixing step (S2) and the kneading step (S3).

2. The method for manufacturing a ceramic formed body according to claim 1, wherein the kneading step (S3) and the forming step (S4) are performed continuously and integrally.

## Patentansprüche

1. Verfahren zur Herstellung eines Keramikformkörpers (2), das Folgendes umfasst:
einen Trockenmischschritt (S1) des Trockenmischens eines Rohmaterials (3) zur Herstellung des Keramikformkörpers mittels Chargenverarbeitung;
einen Nassmischschritt (S2) des Zusetzens von Flüssigkeit (5) zu einem Trockengemisch (4), das im Trockenmischschritt (S1) erhalten wurde, mittels kontinuierlicher Verarbeitung in einer kontinuierlichen Nassmischeinheit (20), wobei das Trockengemisch (4) allmählich in die Nassmischeinheit (20) gefüllt wird, gemäß einem vorgeschriebenen Füllverhältnis mit der Flüssigkeit (5), das gemäß der Füllmenge des Trockengemischs (4), das zur selben Zeit eingefüllt wird, vorgeschrieben ist, wobei die Flüssigkeit zumindest eine Art von Wasser, Tensid, Gleitmittel und Weichmacher umfasst, und zwar während des Nassmischens mittels Rührmechanismus;
einen Knetschritt (S3) des Knetens eines Nassgemischs (6), das im Nassmischschritt (S2) erhalten wurde; und
einen Formschritt (S4) des Extrudierens eines Formungsrohmaterials (8), das im Knetschritt (S3) erhalten wurde, wobei im Knetschritt (S3) die Flüssigkeit (5) gegebenenfalls während des Knetens des Nassgemischs weiter zugegeben wird und wobei eine Menge an Flüssigkeit, die im Nassmischschritt zugegeben wird, 60 bis 100 Massen-%, bezogen auf eine Gesamtadditivmenge der Flüssigkeit, die im Nassmischschritt (S2) und im Knetschritt (S3) zugegeben wird, beträgt.

2. Verfahren zur Herstellung eines Keramikformkörpers nach Anspruch 1, wobei der Knetschritt (S3) und der Formschritt (S4) kontinuierlich und integriert durchgeführt werden.

## Revendications

1. Procédé de fabrication d'un corps formé de céramique (2), comprenant :
une étape de mélange à sec (S1) consistant à mélanger à sec une matière première (3) pour fabriquer le corps formé de céramique par traitement discontinu ;
une étape de mélange humide (S2) consistant à ajouter un liquide (5) à un mélange sec (4) obtenu à l'étape de mélange à sec (S1) par traitement continu dans une unité de mélange humide de type continu (20), le mélange sec (4) étant progressivement chargés dans l'unité de mélange humide (20) selon un rapport de charge prescrit avec le liquide (5) qui est prescrit en fonction de la quantité de charge du mélange sec (4) chargée simultanément, le liquide comprenant au moins un type d'eau, de tensioactif, de lubrifiant et de plastifiant, pendant le mélange humide par un mécanisme d'agitation ;
une étape de malaxage (S3) consistant à malaxer un mélange humide (6) obtenu à l'étape de mélange humide (S2) ; et
une étape de formage (S4) consistant à extruder une matière première de formage (8) obtenue à l'étape de malaxage (S3), et dans lequel, à l'étape de malaxage (S3), le liquide (5) est en outre facultativement ajouté pendant le malaxage du mélange humide, et dans lequel une quantité du liquide ajoutée à l'étape de mélange humide est de 60 à 100 % en masse par rapport à une quantité additive totale du liquide ajouté à l'étape de mélange humide (S2) et l'étape de malaxage (S3).

2. Procédé de fabrication d'un corps formé de céramique selon la revendication 1, dans lequel l'étape de malaxage (S3) et l'étape de formage (S4) sont conduites de façon continue et intégrée.
